# EUROPEAN PATENT APPLICATION

(11) **EP 3 267 724 A1**
(43) Date of publication of application: **10.01.2018**
(21) Application number: 15883800.3
(22) Date of filing: 31.08.2015
(51) Int. Cl.: H04W 36/00, H04W 36/18

(54) **DATA TRANSMISSION METHOD FOR USE DURING BASE STATION HANDOVER, USER DEVICE AND BASE STATION, AND STORAGE MEDIUM**

(30) Priority: 03.03.2015 CN 201510094481
(71) Applicant: ZTE Corporation, Shenzhen, Guangdong 518057 (CN)
(72) Inventor: WANG, Xin, Shenzhen Guangdong 518057 (CN)
(74) Representative: Novagraaf Technologies
(86) International application number: PCT/CN2015/088528
(87) International publication number: WO 2016/138749

(57) **Abstract**

A method for transmitting data during base station handover is provided. In the method, a User Equipment (UE) hands over a Master eNB (MeNB) from a first base station to a target base station according to a received Radio Resource Control Connection Reconfiguration (RRC CR) message; and the UE maintains a connection between the UE and a second base station unchanged and maintains a protocol entity, which corresponds to a Secondary eNB Cell Group (SCG) bearer reserved to be transmitted on the second base station, unchanged. Another method for transmitting data during base station handover, a UE, a base station, and a storage medium are also provided.

## Description

### Technical Field

The present disclosure relates to a base station handover technology in mobile communications, and more particularly relates to a method for transmitting data during base station handover, a User Equipment (UE), a Base Station (BS), and a storage medium.

### Background

In Third Generation Partnership Projects (3GPP), deployment of small cells and enhancement of capacity of small cells are considered to be one of important issues in future communication network development. Here, being distinguished from a macro cell established by a macro base station (which for instance may be embodied as a macro evolved NodeB (eNB)), the small cell may refer to a cell established by a low-power base station (which for instance may be embodied as a low-power eNB). At present, a heterogeneous network deployment scenario widely acknowledged in the communication industry is that a low-power base station may be deployed within a coverage range or at a boundary of a macro base station, and the macro base station and the low-power base station, in combination, form a Radio Access Network (RAN) in an Evolved Universal Terrestrial Radio Access Network (E-UTRAN), so as to provide a combined data transmission service for a UE.

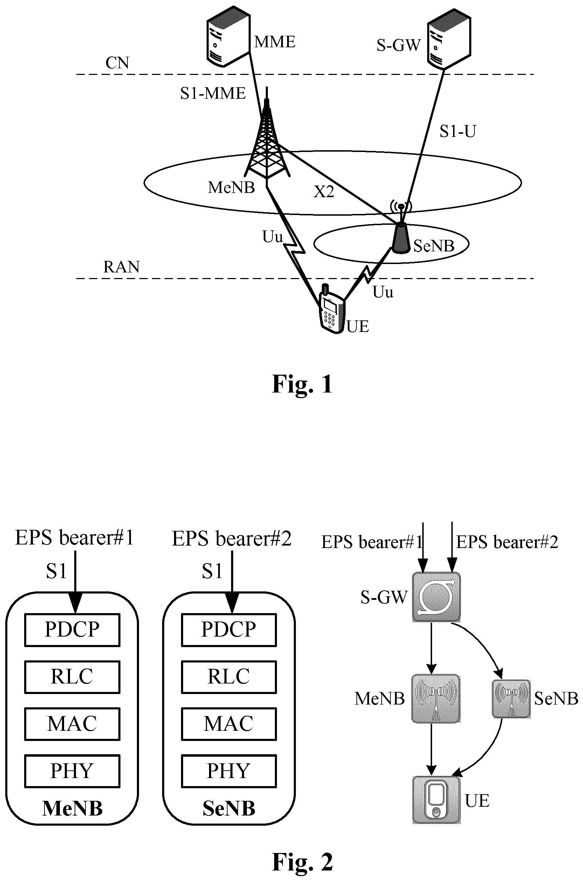

Fig. 1 is a diagram of system architecture under this typical heterogeneous network deployment scenario. As shown in Fig. 1, in the RAN, a base station which establishes an S1-MME interface with a Mobility Management Entity (MME) in a Core Network (CN) and is regarded as a mobile anchor point by the CN may be referred to as a Master base station, which may be embodied as a Master eNB (MeNB). A node which is connected with the MeNB through an X2 interface and provides additional radio resources for the UE may be referred to as a Secondary base station, which may be embodied as a Secondary eNB (SeNB). Radio Uu interfaces may be established between the UE and the MeNB and between the UE and the SeNB respectively, and control plane signaling and user plane data may be transmitted on the Uu interfaces. In this case, the UE is regarded to be under Dual Connectivity (DC). This system architecture may enable two (or even more) base stations to provide radio resources for one UE simultaneously and to perform communication service simultaneously, so the data throughput of a network may be greatly improved, and increasing demands of a user for a data rate may be met to the greatest extent.

Fig. 2 is a diagram of a user plane transmission mode and a protocol stack under this typical heterogeneous network deployment scenario. As shown in Fig. 2, for downlink data, on a user plane, after a Packet Data Convergence Protocol (PDCP) sub-layer receives an Internet Protocol (IP) data packet from an upper layer, the IP data packet may be subjected to header compression and encryption, then may be sent to a Radio Link Control (RLC) sub-layer, and then may be sent to a Media Access Control (MAC) layer and a Physical Layer (PHY).

For downlink data, a transmission mode of an Evolved Packet System (EPS) bearer #1 may be the same as a standard mode of a single-link system. That is, a Serving Gateway (S-GW) may send data packets to the MeNB through an S1-U interface, and then the MeNB may send the data packets to the UE through a Uu interface. In DC, this radio protocol stack may be located on the MeNB only and may use a bearer of MeNB resources only, and such kind of bearer may be referred to as a Master Cell Group (MCG) bearer. According to the transmission mode of an EPS bearer #2, data packets may be sent to the SeNB by the S-GW through the S1-U interface between the S-GW and the SeNB and then may be sent to the UE by the SeNB through the Uu interface. This radio protocol stack may be completely located on the SeNB and may use a bearer of SeNB resources only, and such kind of bearer may be referred to as a Secondary Cell Group (SCG) bearer.

During data transmission and/or movement of the UE, there may be two scenarios. In a first scenario, for example, when variables in a certain protocol entity are accumulated to a certain threshold, some configuration parameters of the UE may need to be modified. In a second scenario, for example, when the quality of a radio signal is reduced to a certain threshold or a current serving base station is over-loaded, handover of a serving base station of the UE from a currently-connected base station (which may be referred to as a source base station, e.g., a source eNB) to another base station (which may be referred to as a target base station, e.g., a target eNB) under appropriate conditions may be needed. These two scenarios may be implemented by means of an intra-base station handover (may be embodied as intra-eNB handover, in which the UE is connected with the same eNB before and after handover, and some parameters may be reconfigured) procedure or an inter-base station handover (may be embodied as inter-eNB handover, in which the UE is connected with different eNBs before and after handover) procedure.

Under the abovementioned system architecture, when handover for the MeNB of the UE in the DC state is needed, the SeNB of the UE may be released before or during the handover procedure in a related handover technology. If a certain eNB satisfying appropriate service demands and conditions exists after the UE accesses the target eNB (for intra-eNB handover, the target eNB is the source MeNB), the target eNB may add this eNB as the SeNB for the UE. Alternatively, for intra-eNB handover, if the original SeNB still satisfies a set threshold, the MeNB may carry intra-MeNB handover information of the MeNB and the release and re-addition information of the SeNB in one control plane signaling simultaneously, that is, the MeNB may instruct, by means of only one air interface control plane signaling, the UE to reconfigure resources of the two eNBs.

It may be concluded that, under an existing design capacity of the network, transmission of user plane data between the UE and the SeNB may be interrupted due to the MeNB handover of the UE. Even in an intra-MeNB handover procedure, if the UE spends a longer time in accessing to a cell of a target eNB, the interruption time of the user plane data between the UE and the SeNB may be prolonged accordingly. This means that radio resources capable of being provided for the UE by the network are idle, that is, the data throughput of the UE which could have been increased is somehow limited, and the overall service performance of the network is reduced accordingly.

### Summary

Some embodiments of the present disclosure provide a method for transmitting data during base station handover, a UE, a base station, and a storage medium, which may solve the problem in the related technology.

The solution of the embodiments of the present disclosure is implemented as follows.

An embodiment of the present disclosure provides a method for transmitting data during base station handover, which may include the acts as follows.

A UE hands over an MeNB from a first base station to a target base station according to a received Radio Resource Control Connection Reconfiguration (RRC CR) message.

The UE maintains a connection between the UE and a second base station unchanged and maintains a protocol entity, which corresponds to an SCG bearer reserved to be transmitted on the second base station, unchanged.

While the UE maintains the connection between the UE and the second base station unchanged and maintains the protocol entity, which corresponds to the SCG bearer reserved to be transmitted on the second base station, unchanged, the method may further include the acts as follows.

The UE leaves a cell of the first base station, synchronizes with a cell of the target base station, initiates random access to the target base station, and reconstructs or resets a protocol entity corresponding to an MCG bearer.

Or, when the target base station is identical to the first base station, the UE synchronizes with a cell of the first base station, initiates random access to the first base station, and reconstructs or resets a protocol entity corresponding to an MCG bearer.

While the UE maintains the connection between the UE and the second base station unchanged and maintains the protocol entity, which corresponds to the SCG bearer reserved to be transmitted on the second base station, unchanged, the UE may add or delete an SCG bearer, and may reconstruct or reset, or delete a protocol entity corresponding to the SCG bearer.

The UE may transmit user plane data on the SCG bearer reserved to be transmitted on the second base station.

Another embodiment of the present disclosure provides a UE, which may include: a receiving module, a handover module and a first protocol processing module.

The receiving module may be configured to receive an RRC CR message.

The handover module may be configured to hand over an MeNB from a first base station to a target base station.

The first protocol processing module may be configured to maintain a connection between the UE and a second base station unchanged and maintain a protocol entity, which corresponds to an SCG bearer reserved to be transmitted on the second base station, unchanged.

While the first protocol processing module maintains the connection between the UE and the second base station unchanged and maintains the protocol entity, which corresponds to the SCG bearer reserved to be transmitted on the second base station, unchanged,
the first protocol processing module may be further configured to reconstruct or reset a protocol entity corresponding to an MCG bearer, and the handover module may be further configured to leave a cell of the first base station, synchronize with a cell of the target base station, and initiate random access to the target base station;
or, when the target base station is identical to the first base station, the first protocol processing module may be further configured to reconstruct or reset a protocol entity corresponding to an MCG bearer, and the handover module may be further configured to synchronize with a cell of the first base station and initiate random access to the first base station.

The first protocol processing module may be further configured to, while maintaining the connection between the UE and the second base station unchanged and maintaining the protocol entity, which corresponds to the SCG bearer reserved to be transmitted on the second base station, unchanged, add or delete an SCG bearer, and reconstruct or reset or delete a protocol entity corresponding to the SCG bearer.

The UE may further include a first transmission module, configured to transmit user plane data on the SCG bearer reserved to be transmitted on the second base station.

Still another embodiment of the present disclosure provides a method for transmitting data during base station handover, which may include the acts as follows.

When an MeNB is handed over from a first base station to a target base station, a second base station maintains a connection between the second base station and a UE unchanged and maintains a protocol entity, which corresponds to an SCG bearer reserved to be transmitted on the second base station, unchanged, and schedules user plane data on the SCG bearer reserved to be transmitted on the second base station.

The method may further include the following act. The first base station may send an SeNB release request to the second base station to instruct the second base station to release a UE-related X2 connection between the second base station and the first base station in such a way that release of the UE-related X2 connection does not affect UE-related user plane data scheduling and resource configuration of the second base station as well as a UE-related context saved on the second base station.

The method may further include the following act. The first base station may send an intra-MeNB handover notification message to the second base station to notify the second base station that an intra-base station handover has been performed or is being performed for the MeNB.

Still another embodiment of the present disclosure provides an eNB, which may include a second protocol processing module and a second transmission module.

The second protocol processing module may be configured to, when an MeNB is handed over from a first base station to a target base station, maintain a connection with a UE unchanged and maintain a protocol entity, which corresponds to an SCG bearer reserved to be transmitted on a second base station, unchanged.

The second transmission module may be configured to schedule user plane data on the SCG bearer reserved to be transmitted on the second base station.

The second protocol processing module may be further configured to send an SeNB release request to the second base station to instruct the second base station to release a UE-related X2 connection between the second base station and the first base station in such a way that release of the UE-related X2 connection does not affect UE-related user plane data scheduling and resource configuration of the second base station as well as a UE-related context saved on the second base station.

The second protocol processing module is further configured to send an intra-MeNB handover notification message to the second base station to notify the second base station that an intra-base station handover has been performed or is being performed for the MeNB.

A storage medium is provided. A computer program may be stored in the storage medium. The computer program may be configured to execute the abovementioned method for transmitting data during base station handover.

The embodiment of the present disclosure provides a method for transmitting data during base station handover, a UE, a base station, and a storage medium. When an MeNB is handed over from a first base station to a target base station, a UE maintains a connection between the UE and a second base station unchanged and maintains a protocol entity, which corresponds to an SCG bearer reserved to be transmitted on the second base station, unchanged. Thus, the UE may maintain the connection between the UE and the second base station before and after the master base station handover (which may be embodied as MeNB handover), so that data may be transmitted between the UE and the second base station uninterruptedly, thereby improving the data transmission performance and throughput of the UE. In addition, data transmission between the second base station and the UE is not affected by the master base station handover (which may be embodied as MeNB handover), so as to increase the radio resource usage efficiency of the whole network.

### Brief Description of the Drawings

Fig. 1 is a diagram of system architecture under a typical heterogeneous network deployment scenario;
Fig. 2 is a diagram of a user plane transmission mode and a protocol stack under a typical heterogeneous network deployment scenario;
Fig. 3 is a handover scenario diagram of a method for transmitting data during base station handover according to an embodiment of the present disclosure;
Fig. 4 is a first flowchart of a method for transmitting data during base station handover according to an embodiment of the present disclosure;
Fig. 5 is a second flowchart of a method for transmitting data during base station handover according to an embodiment of the present disclosure;
Fig. 6 is a third flowchart of a method for transmitting data during base station handover according to an embodiment of the present disclosure;
Fig. 7 is a fourth flowchart of a method for transmitting data during base station handover according to an embodiment of the present disclosure;
Fig. 8 is a structure diagram of a UE for transmitting data during base station handover according to an embodiment of the present disclosure;
Fig. 9 is a flowchart of a method for transmitting data during base station handover according to another embodiment of the present disclosure; and
Fig. 10 is a structure diagram of a base station for transmitting data during base station handover according to an embodiment of the present disclosure.

### Detailed Description of the Embodiments

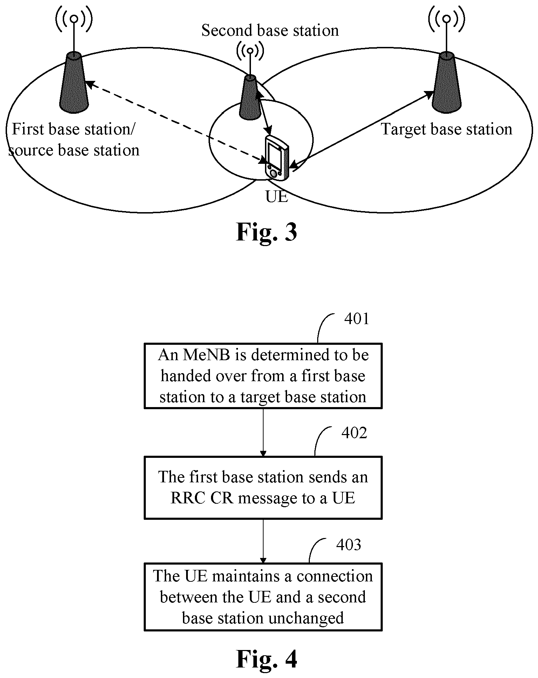

Fig. 3 is a handover scenario diagram of a method for transmitting data during base station handover according to an embodiment of the present disclosure. Under this scenario, a UE may establish a radio connection with a first base station and a second base station in an RAN, and an interface may be established between the first base station and the second base station, where the interface may be an X2 interface.

Control plane signaling and user plane data may be transmitted between the UE and the first base station, and control plane signaling and user plane data may be transmitted between the first base station and a node corresponding to a CN. In this case, the first base station is equivalent to a master base station (which may be embodied as an MeNB), which refers to role or position of a base station in DC. Before handover, the first base station is a master base station (embodied as an MeNB herein), and also is a source base station (embodied as a source MeNB herein) during handover. After handover, a target base station is a master base station (embodied as an MeNB herein), and also is a target base station (embodied as MeNB herein) during handover. User plane data may be at least transmitted between the UE and the second base station. User plane data may be transmitted between the second base station and an S-GW in the CN. In this case, the second base station is equivalent to a secondary base station (embodied as an SeNB herein), which refers to a role or position of a base station in DC.

Under other scenarios provided in the embodiments of the present disclosure, there may be more than one first base station and more than one second base station. That is, the UE may access multiple base stations simultaneously. Moreover, the first base station and the second base station may be various types of base stations such as low-power base stations and/or macro base stations.

In an embodiment of the present disclosure, during movement of the UE, the quality of a signal between the UE and a serving cell (referred to as a first base station cell) of the first base station (which may be referred to as a source base station in a movement scenario) is reduced, and the quality of a signal between the UE and a cell of the target base station is increased. Meanwhile, the UE may be within a coverage range of the second base station all the time, that is, the quality of a signal between the UE and a cell of the second base station is good during the movement of the UE. After it is determined to hand over a base station playing the role of an MeNB from the first base station to the target base station, the UE leaves the cell of the first base station and accesses the cell of the target base station. During handover of the MeNB from the first base station to the target base station, the UE maintains a connection between the UE and the second base station unchanged and maintains a protocol entity, which corresponds to an SCG bearer reserved to be transmitted on the second base station, unchanged. Therefore, user plane data transmission between the UE and the second base station may not be interrupted, that is, data may be transmitted uninterruptedly between the UE and the second base station, so the data transmission performance and throughput of the UE are effectively improved, and the radio resource usage efficiency of the whole network is increased.

Herein, the protocol entity refers to a complete radio protocol stack borne in a node. As shown in Fig. 2, the radio protocol stack may include a PDCP sub-layer, an RLC sub-layer, an MAC sub-layer and a PHY. Maintaining the protocol entity unchanged may refer to: maintaining an RRC resource configuration of the protocol entity unchanged without reconstruction or reset of the entity.

The present disclosure will be further described in detail hereinbelow with reference to specific embodiments and drawings.

In an embodiment of the present disclosure as shown in Fig. 4, the method for transmitting data during base station handover may include the acts as follows.

At act 401, an MeNB may be determined to be handed over from a first base station to a target base station.

In the present act, the first base station may send a handover request message to the target base station, the handover request message carrying resource configuration information of a UE at a source network side. The target base station may determine, according to the resource configuration information, to accept access of the UE, may determine a connection situation between the UE and a second base station and a bearer-level resource configuration, and may send a handover request acknowledgment message to the first base station.

In the present act, the first base station may also determine to execute an intra-base station handover according to parameters such as radio signal quality, and may maintain a cell of the second base station and resource configuration unchanged. Alternatively, the first base station may determine to execute an intra-base station handover according to a configuration parameter change condition of the UE, and in this case, the target base station is identical to the first base station, and the resource configuration information may be updated by the first base station.

At act 402, the first base station may send a Radio Resource Control Connection Reconfiguration (RRC CR) message to the UE.

Herein, the RRC CR message may carry, in addition to new resource configuration information, information for instructing the UE to maintain a connection between the UE and the second base station unchanged and maintain a protocol entity, which corresponds to an SCG bearer reserved to be transmitted on the second base station, unchanged.

At act 403, the UE may hand over an MeNB from the first base station to the target base station according to the received RRC CR message. Meanwhile, the UE may maintain a connection between the UE and the second base station unchanged and maintain a protocol entity, which corresponds to an SCG bearer reserved to be transmitted on the second base station, unchanged.

Herein, the UE may leave a cell of the first base station, synchronize with a cell of the target base station, initiate random access to the target base station, and reconstruct or reset a protocol entity corresponding to an MCG bearer.

Alternatively, when the target base station is identical to the first base station, the UE may synchronize with a cell of the first base station, initiate random access to the first base station, and reconstruct or reset a protocol entity corresponding to an MCG bearer.

In the present act, downlink/uplink data tunnel endpoints of the SCG bearer may be maintained unchanged, so that the UE and the second base station may continuously schedule user plane data on the SCG bearer. While the connection between the UE and the second base station and the protocol entity corresponding to the SCG bearer reserved to be transmitted on the second base station are maintained unchanged, the UE may add or delete an SCG bearer, and may reconstruct or reset, or delete a protocol entity corresponding to the SCG bearer. The UE and the second base station may continuously schedule user plane data on the SCG bearer reserved to be transmitted on the second base station and/or the added SCG bearer.

The UE may also send an RRC Connection Reconfiguration Complete (CRC) message to the target base station to indicate that the UE has started a new resource configuration.

After the target base station receives the RRC CRC message, the target base station may further send a path conversion indication message to a CN node to indicate changes of the downlink/uplink data tunnel endpoints of an MCG bearer borne by the target base station and the SCG bearer newly added to the second base station.

By means of the method for transmitting data during base station handover provided according to the embodiment of the present disclosure as shown in Fig. 4, a UE may maintain a connection between the UE and a second base station unchanged and maintain a protocol entity, which corresponds to an SCG bearer reserved to be transmitted on the second base station, unchanged before and after MeNB handover, so that the UE and the second base station may continuously schedule user plane data on the SCG bearer, thereby improving the data transmission performance and throughput of the UE. Meanwhile, data transmission between the second base station and the UE is not affected by the MeNB handover, so as to increase the radio resource usage efficiency of the whole network.

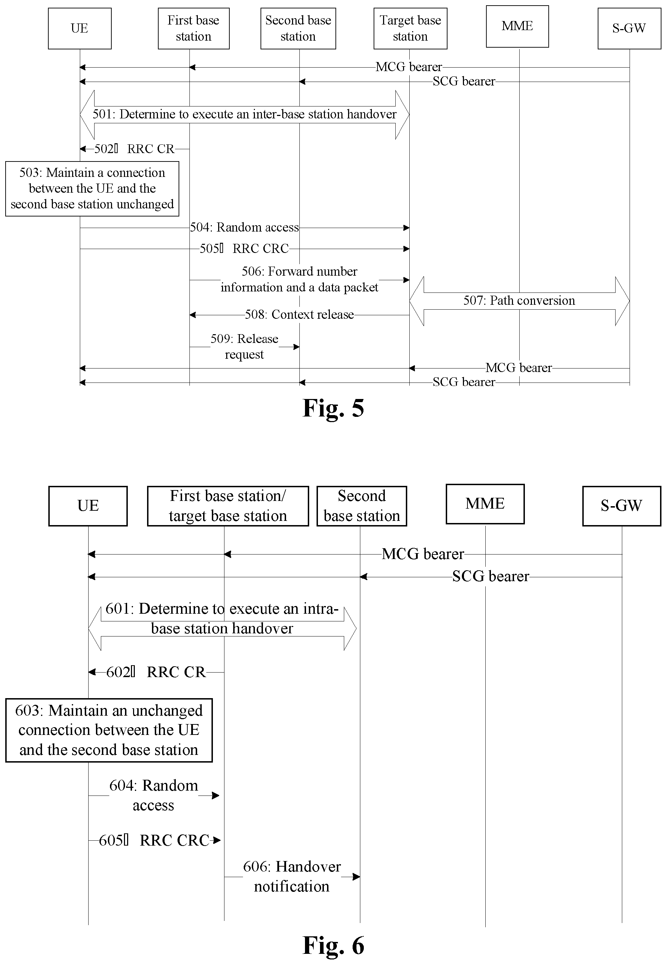

In an embodiment of the present disclosure as shown in Fig. 5, the method for transmitting data during base station handover may include the acts as follows.

At act 501, in a handover preparation stage, it may be determined to execute an inter-base station handover.

In the present embodiment, a UE may be configured with two bearers, namely an MCG bearer established with a first base station and an SCG bearer established with a second base station.

Herein, the first base station may send a handover request message to a target base station, the handover request message carrying resource configuration information of the UE at a source network side.

According to the resource configuration information, the target base station may determine whether to accept the inter-base station handover and may determine a connection situation between the UE and the second base station.

After determining to execute the inter-base station handover, the target base station may send a handover request acknowledgment message to the first base station, the handover request acknowledgment message carrying new resource configuration information.

At act 502, the first base station may send an RRC CR message to the UE to instruct the UE to hand over an MeNB from the first base station to the target base station.

Herein, the RRC CR message may carry, in addition to the new resource configuration information, information for instructing the UE to maintain a connection between the UE and the second base station unchanged and maintain a protocol entity, which corresponds to an SCG bearer reserved to be transmitted on the second base station, unchanged.

Further, the information, for instructing the UE to maintain the connection between the UE and the second base station unchanged and maintain the protocol entity corresponding to the SCG bearer reserved to be transmitted on the second base station unchanged, carried in the RRC CR message may not include existing mobility control information (Mobility Control Info).

At act 503, the UE may maintain a connection between the UE and the second base station unchanged and maintain a protocol entity, which corresponds to the SCG bearer reserved to be transmitted on the second base station, unchanged.

In the present act, downlink/uplink data tunnel endpoints of the SCG bearer are maintained unchanged, so that the UE and the second base station may continuously schedule user plane data on the SCG bearer.

Act 504 to act 509 and the present act may be implemented simultaneously, or may be implemented separately.

At act 504, the UE may initiate random access to the target base station.

Herein, the UE may leave a cell of the first base station, synchronize with a cell of the target base station, and initiate random access to the target base station.

In the present act, a protocol entity corresponding to an MCG bearer may be reconstructed or reset according to the new resource configuration information.

At act 505, the UE may send an RRC CRC message to the target base station to indicate that the UE has started a new resource configuration.

After receiving the RRC CRC message, the target base station may directly schedule transmission of a user plane for the UE.

At act 506, the first base station may forward number information of a data packet of the MCG bearer and the data packet to the target base station according to the handover request acknowledgment message.

At act 507, the target base station may send a path conversion indication message to a CN node (including an MME and an S-GW) to indicate changes of downlink/uplink data tunnel endpoints of the MCG bearer borne by the target base station.

Herein, path conversion does not include conversion of downlink/uplink data tunnel endpoints of the SCG bearer reserved to be transmitted on the second base station, that is, a user plane path of the SCG bearer is maintained unchanged before and after MeNB handover.

At act 508, the target base station may send UE CONTEXT RELEASE to the first base station.

At act 509, the first base station may send an SeNB release request to the second base station to instruct the second base station to release a UE-related X2 connection between the second base station and the first base station.

Herein, the SeNB release request may be sent through an X2 control plane message (such as SENB RELEASE REQUEST) defined in the existing standard, and a new message may be defined to instruct the second base station to release a UE-related X2 connection between the second base station and the first base station.

In the present act, the release of the UE-related X2 connection does not affect UE-related user plane data scheduling and resource configuration of the second base station as well as a UE-related context saved on the second base station.

By means of the method for transmitting data during base station handover provided according to the embodiment of the present disclosure as shown in Fig. 5, a UE can maintain a connection between the UE and a second base station unchanged and maintain a protocol entity, which corresponds to an SCG bearer reserved to be transmitted on the second base station, unchanged before and after MeNB handover, so that the UE and the second base station may continuously schedule user plane data on the SCG bearer, thereby improving the data transmission performance and throughput of the UE. Meanwhile, data transmission between the second base station and the UE is not affected by the MeNB handover, so as to increase the radio resource usage efficiency of the whole network.

In an embodiment of the present disclosure as shown in Fig. 6, the method for transmitting data during base station handover may include the acts as follows.

At act 601, in a handover preparation stage, it may be determined to execute an intra-base station handover.

In the present embodiment, a UE may be configured with two bearers, namely an MCG bearer established with a first base station and an SCG bearer established with a second base station.

In the present act, the first base station (that is, target base station) may determine to execute the intra-base station handover according to parameters such as radio signal quality and loads and to maintain a cell of the second base station and resource configuration unchanged. Alternatively, the first base station may determine to execute the intra-base station handover and to update resource configuration information according to a configuration parameter change condition of the UE.

At act 602, the first base station may send an RRC CR message to the UE.

Herein, the RRC CR message may carry, in addition to the updated new resource configuration information, information for instructing the UE to maintain a connection between the UE and the second base station unchanged and maintain a protocol entity, which corresponds to an SCG bearer reserved to be transmitted on the second base station, unchanged.

Further, the information, for instructing the UE to maintain the connection between the UE and the second base station unchanged and maintain the protocol entity corresponding to the SCG bearer reserved to be transmitted on the second base station unchanged, carried in the RRC CR message may not include existing mobility control information (Mobility Control Info).

At act 603, the UE may maintain a connection between the UE and the second base station unchanged and maintain a protocol entity, which corresponds to the SCG bearer reserved to be transmitted on the second base station, unchanged.

In the present act, downlink/uplink data tunnel endpoints of the SCG bearer may be maintained unchanged, so that the UE and the second base station may continuously schedule user plane data on the SCG bearer.

Act 604 to act 606 and the present act may be implemented simultaneously, or may be implemented separately.

At act 604, the UE may re-synchronize with a cell of the first base station, and initiate random access to the first base station.

In the present act, a protocol entity corresponding to an MCG bearer may be reconstructed or reset according to the updated new resource configuration information.

At act 605, the UE may send an RRC CRC message to the target base station to indicate that the UE has started a new resource configuration.

At act 606, the first base station may send an intra-MeNB handover notification message to the second base station.

The present act is used for notifying the second base station that an intra-base station handover has been performed or is being performed on an MeNB, and may be executed after any one of act 601 to act 605.

By means of the method for transmitting data during base station handover provided according to the embodiment of the present disclosure as shown in Fig. 6, a UE can maintain a connection between the UE and a second base station unchanged and maintain a protocol entity, which corresponds to an SCG bearer reserved to be transmitted on the second base station, unchanged before and after MeNB handover, so that the UE and the second base station may continuously schedule user plane data on the SCG bearer, thereby improving the data transmission performance and throughput of the UE. Meanwhile, data transmission between the second base station and the UE is not affected by the MeNB handover, so as to increase the radio resource usage efficiency of the whole network.

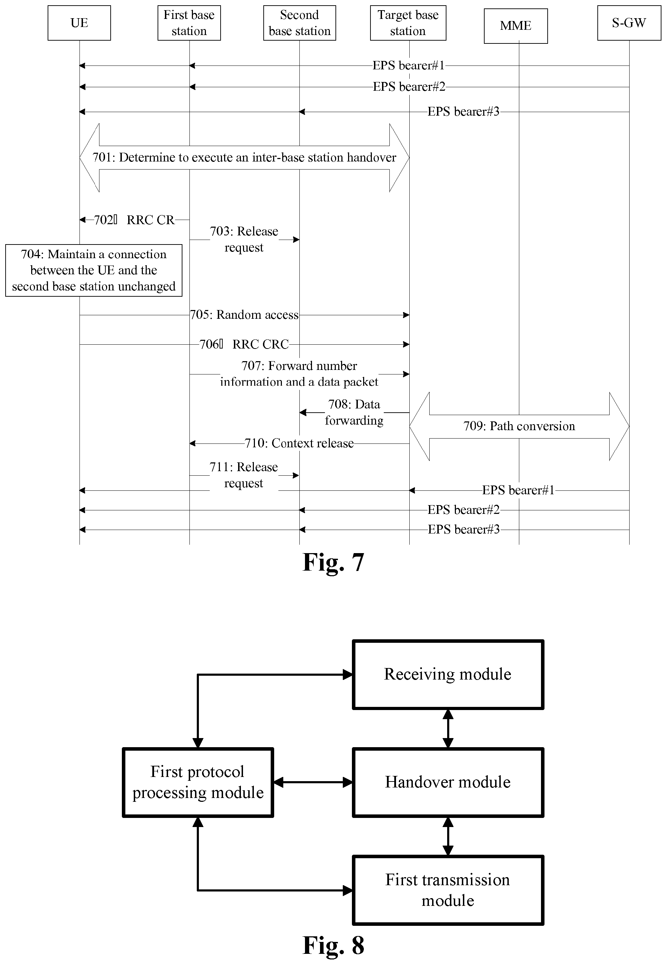

In an embodiment of the present disclosure as shown in Fig. 7, the method for transmitting data during base station handover may include the acts as follows.

At act 701, in a handover preparation stage, it may be determined to execute an inter-base station handover.

In the present embodiment, a UE may be configured with three bearers, an EPS bearer #1 and an EPS bearer #2 belong to MCG bearers, and an EPS bearer#3 belongs to a SCG bearer.

Herein, a first base station may send a handover request message to a target base station, the handover request message carrying resource configuration information of a UE at a source network side. The target base station may determine, according to the resource configuration information, whether to accept the inter-base station handover, and may determine a connection situation between the UE and a second base station.

After determining to execute the inter-base station handover, the target base station may send a handover request acknowledgment message to the first base station, the handover request acknowledgment message carrying new resource configuration information.

At act 702, the first base station may send an RRC CR message to the UE to instruct the UE to hand over an MeNB from the first base station to the target base station.

Herein, the RRC CR message may carry, in addition to the new resource configuration information, information for instructing the UE to maintain a connection between the UE and the second base station and to reconstruct the EPS bearer #2 into an SCG bearer.

Further, the information, for instructing the UE to maintain a connection between the UE and the second base station and to reconstruct the EPS bearer #2 into an SCG bearer, carried in the RRC CR message may not include existing mobility control information (Mobility Control Info).

At act 703, the first base station may send an SeNB release request to the second base station to instruct the second base station to construct the EPS bearer #2 into the SCG bearer.

In the present act, a protocol entity corresponding to the EPS bearer #2 may be reconstructed according to a new resource configuration.

Act 704 to act 711 and the present act may be implemented simultaneously, or may be implemented separately.

At act 704, the UE may maintain a protocol entity, which corresponds to an SCG bearer reserved to be transmitted on the second base station, unchanged according to the RRC CR message.

Herein, the UE may further initiate random access to a cell of the second base station according to the new resource configuration information in the RRC CR message.

Herein, a protocol entity corresponding to the EPS bearer #3 may be maintained unchanged. After the random access is completed, the second base station may continuously schedule transmission of user plane data for the UE through the EPS bearer #2 and the EPS bearer #3.

At act 705, the UE may initiate random access to the target base station.

Herein, the UE may leave a cell of the first base station, synchronize with a cell of the target base station, and initiate random access to the target base station.

In the present act, a protocol entity corresponding to the EPS bearer #1 may be reconstructed or reset according to the new resource configuration information.

At act 706, the UE may send an RRC CRC message to the target base station to indicate that the UE has started a new resource configuration.

In the present act, after receiving the RRC CRC message, the target base station may directly schedule transmission of a user plane for the UE.

At act 707, the first base station may forward number information of a data packet of the EPS bearer #1 and the data packet to the target base station according to the handover request acknowledgment message.

Herein, number information of a data packet of the EPS bearer #2 and the data packet may be forwarded to the second base station. Thus, it may be unnecessary to execute act 708.

Further, after receiving the data packet, the second base station may schedule the UE to transmit the data packets of the EPS bearer #2 and the EPS bearer #3.

At act 708, after receiving the data packet forwarded by the first base station, the target base station may further forward the corresponding data packet to the second base station.

At act 709, the target base station may send a path conversion indication message to a CN node (including an MME and an S-GW) to indicate changes of downlink/uplink data tunnel endpoints of the MCG bearer borne by the target base station and the SCG bearer newly added to the second base station.

Herein, the downlink/uplink data tunnel endpoint of the EPS bearer #1 may be converted from the first base station to the target base station, and the downlink/uplink data tunnel endpoint of the EPS bearer #2 may converted from the first base station to the second base station. It should be noted that path conversion does not include conversion of an S1 data tunnel endpoint of the EPS bearer #3 reserved to be transmitted on the second base station, that is, the user plane path of the EPS bearer #3 is maintained unchanged before and after MeNB handover.

At act 710, the target base station may send UE CONTEXT RELEASE to the first base station.

At act 711, the first base station may send an SeNB release request to the second base station to instruct the second base station to release a UE-related X2 connection between the second base station and the first base station.

Herein, the SeNB release request may be sent through an X2 control plane message (such as SENB RELEASE REQUEST) defined in the existing standard, and a new message may be defined to instruct the second base station to release a UE-related X2 connection between the second base station and the first base station.

In the present act, the release of the UE-related X2 connection does not affect UE-related user plane data scheduling and resource configuration of the second base station as well as a UE-related context saved on the second base station.

By means of the method for transmitting data during base station handover provided according to the embodiment of the present disclosure as shown in Fig. 7, a UE can maintain a connection between the UE and a second base station unchanged and maintain a protocol entity, which corresponds to an SCG bearer reserved to be transmitted on the second base station, unchanged before and after MeNB handover, that is, a user plane path of an EPS bearer #3 is maintained unchanged before and after the MeNB handover, so as to improve the data transmission performance and throughput of the UE. Meanwhile, data transmission between the second base station and the UE is not affected by the MeNB handover, so as to increase the radio resource usage efficiency of the whole network.

In an embodiment of the present disclosure as shown in Fig. 8, the UE for transmitting data during base station handover may include: a receiving module, a handover module and a first protocol processing module.

The receiving module may be configured to receive an RRC CR message.

The handover module may be configured to hand over an MeNB from a first base station to a target base station.

The first protocol processing module may be configured to maintain a connection between the UE and a second base station unchanged and maintain a protocol entity, which corresponds to an SCG bearer reserved to be transmitted on the second base station, unchanged.

While the connection between the UE and the second base station and the protocol entity corresponding to the SCG bearer reserved to be transmitted on the second base station are maintained unchanged,
the first protocol processing module may be further configured to reconstruct or reset a protocol entity corresponding to an MCG bearer, and the handover module may be further configured to leave a cell of the first base station, synchronize with a cell of the target base station, and initiate random access to the target base station.

Alternatively, when the target base station is identical to the first base station, the first protocol processing module may be further configured to reconstruct or reset a protocol entity corresponding to an MCG bearer, and the handover module may be further configured to synchronize with a cell of the first base station and initiate random access to the first base station.

The first protocol processing module may be further configured to, while maintaining the connection between the UE and the second base station unchanged and maintaining the protocol entity corresponding to the SCG bearer reserved to be transmitted on the second base station unchanged, add or delete an SCG bearer, and reconstruct or reset or delete a protocol entity corresponding to the SCG bearer.

The UE may further include a first transmission module, configured to transmit user plane data on the SCG bearer reserved to be transmitted on the second base station.

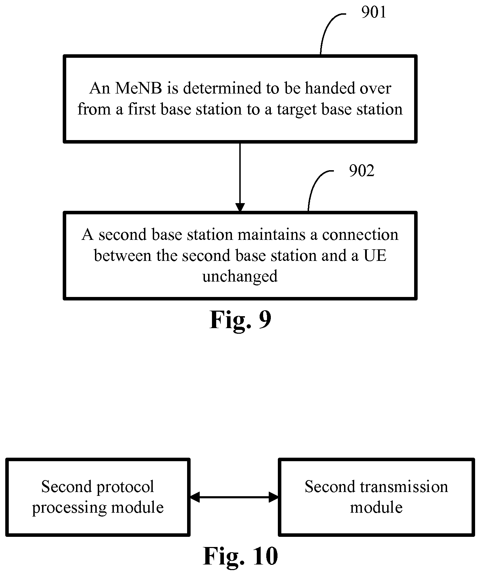

In an embodiment of the present disclosure as shown in Fig. 9, the method for transmitting data during base station handover may include the acts as follows.

At act 901, an MeNB may be determined to be handed over from a first base station to a target base station in a handover preparation stage.

At act 902, when the MeNB is handed over from the first base station to the target base station, a second base station may maintain a connection between the second base station and a UE unchanged and maintain a protocol entity corresponding to an SCG bearer reserved to be transmitted on the second base station unchanged, and may schedule user plane data on the SCG bearer reserved to be transmitted on the second base station.

In an embodiment of the present disclosure as shown in Fig. 10, a base station for transmitting data during base station handover may include: a second protocol processing module and a second transmission module.

The second protocol processing module may be configured to, when an MeNB is handed over from a first base station to a target base station, maintain a connection with a UE unchanged and maintain a protocol entity, which corresponds to an SCG bearer reserved to be transmitted on a second base station, unchanged.

The second transmission module may be configured to schedule user plane data on the SCG bearer reserved to be transmitted on the second base station.

The second protocol processing module may be further configured to send an SeNB release request to the second base station to instruct the second base station to release a UE-related X2 connection between the second base station and the first base station in such a way that release of the UE-related X2 connection does not affect UE-related user plane data scheduling and resource configuration of the second base station as well as a UE-related context saved on the second base station.

The second protocol processing module may be further configured to send an intra-MeNB handover notification message to the second base station to notify the second base station that an intra-base station handover has been performed or is being performed for the MeNB.

An embodiment of the present disclosure also provides a storage medium. A computer program may be stored in the storage medium. The computer program may be configured to execute the method for transmitting data during base station handover according to each of the abovementioned embodiments.

The above is only the exemplary embodiments of the present disclosure, and not intended to limit the scope of protection of the present disclosure.

### Industrial Applicability

According to the solution provided by some embodiments of the present disclosure, when an MeNB is handed over from a first base station to a target base station, a UE maintains a connection between the UE and a second base station unchanged and maintains a protocol entity, which corresponds to an SCG bearer reserved to be transmitted on the second base station, unchanged. Thus, the UE can maintain the connection between the UE and the second base station before and after the MeNB handover, that is, data can be transmitted between the UE and the second base station uninterruptedly, so as to improve the data transmission performance and throughput of the UE. Meanwhile, data transmission between the second base station and the UE is not affected by the MeNB handover, so as to increase the radio resource usage efficiency of the whole network.

## Claims

1. A method for transmitting data during base station handover, comprising:
handing over, by a User Equipment, UE, a Master eNB, MeNB, from a first base station to a target base station according to a received Radio Resource Control Connection Reconfiguration, RRC CR, message; and
maintaining, by the UE, a connection between the UE and a second base station unchanged and maintaining, by the UE, a protocol entity, which corresponds to a Secondary Cell Group, SCG, bearer reserved to be transmitted on the second base station, unchanged.

2. The method as claimed in claim 1, wherein while the UE maintains the connection between the UE and the second base station unchanged and maintains the protocol entity, which corresponds to the SCG bearer reserved to be transmitted on the second base station, unchanged, the method further comprises:
leaving, by the UE, a cell of the first base station, synchronizing, by the UE, with a cell of the target base station, initiating, by the UE, random access to the target base station, and reconstructing or resetting, by the UE, a protocol entity corresponding to a Master Cell Group, MCG, bearer;
or, when the target base station is identical to the first base station, synchronizing, by the UE, with a cell of the first base station, initiating, by the UE, random access to the first base station, and reconstructing or resetting, by the UE, a protocol entity corresponding to an MCG bearer.

3. The method as claimed in claim 1 or 2, wherein while the UE maintains the connection between the UE and the second base station unchanged and maintains the protocol entity, which corresponds to the SCG bearer reserved to be transmitted on the second base station, unchanged, the UE adds or deletes an SCG bearer, and reconstructs or resets, or deletes a protocol entity corresponding to the SCG bearer.

4. The method as claimed in claim 1 or 2, wherein the UE transmits user plane data on the SCG bearer reserved to be transmitted on the second base station.

5. A User Equipment, UE, comprising: a receiving module, a handover module and a first protocol processing module, wherein
the receiving module is configured to receive a Radio Resource Control Connection Reconfiguration, RRC CR, message;
the handover module is configured to hand over a Master evolved Node B, MeNB, from a first base station to a target base station; and
the first protocol processing module is configured to maintain a connection between the UE and a second base station unchanged and maintain a protocol entity, which corresponds to a Secondary Cell Group, SCG, bearer reserved to be transmitted on the second base station, unchanged.

6. The UE as claimed in claim 1, wherein while the first protocol processing module maintains the connection between the UE and the second base station unchanged and maintains the protocol entity, which corresponds to the SCG bearer reserved to be transmitted on the second base station, unchanged,
the first protocol processing module is further configured to reconstruct or reset a protocol entity corresponding to a Master Cell Group, MCG, bearer; and the handover module is further configured to leave a cell of the first base station, synchronize with a cell of the target base station, and initiate random access to the target base station;
or,
when the target base station is identical to the first base station, the first protocol processing module is further configured to reconstruct or reset a protocol entity corresponding to an MCG bearer, and the handover module is further configured to synchronize with a cell of the first base station and initiate random access to the first base station.

7. The UE as claimed in claim 5 or 6, wherein the first protocol processing module is further configured to, while maintaining the connection between the UE and the second base station unchanged and maintaining the protocol entity, which corresponds to the SCG bearer reserved to be transmitted on the second base station, unchanged, add or delete an SCG bearer, and reconstruct or reset or delete a protocol entity corresponding to the SCG bearer.

8. The UE as claimed in claim 5 or 6, further comprising a first transmission module, configured to transmit user plane data on the SCG bearer reserved to be transmitted on the second base station.

9. A method for transmitting data during base station handover, comprising:
when a Master eNB, MeNB, is handed over from a first base station to a target base station, maintaining, by a second base station, a connection between the second base station and a User Equipment, UE, unchanged and maintaining, by the second base station, a protocol entity, which corresponds to a Secondary Cell Group, SCG, bearer reserved to be transmitted on the second base station, unchanged, and scheduling, by the second base station, user plane data on the SCG bearer reserved to be transmitted on the second base station.

10. The method as claimed in claim 9, further comprising: sending, by the first base station, a Secondary eNB, SeNB, release request to the second base station, to instruct the second base station to release a UE-related X2 connection between the second base station and the first base station in such a way that release of the UE-related X2 connection does not affect UE-related user plane data scheduling and resource configuration of the second base station as well as a UE-related context saved on the second base station.

11. The method as claimed in claim 9, further comprising: sending, by the first base station, an intra-MeNB handover notification message to the second base station to notify the second base station that an intra-base station handover has been performed or is being performed for the MeNB.

12. A base station, comprising: a second protocol processing module and a second transmission module, wherein
the second protocol processing module is configured to, when a Master eNB, MeNB, is handed over from a first base station to a target base station, maintain a connection with a User Equipment, UE, unchanged and maintain a protocol entity, which corresponds to a Secondary Cell Group, SCG, bearer reserved to be transmitted on a second base station, unchanged; and
the second transmission module is configured to schedule user plane data on the SCG bearer reserved to be transmitted on the second base station.

13. The base station as claimed in claim 12, wherein the second protocol processing module is further configured to send a Secondary eNB, SeNB, release request to the second base station to instruct the second base station to release a UE-related X2 connection between the second base station and the first base station in such a way that release of the UE-related X2 connection does not affect UE-related user plane data scheduling and resource configuration of the second base station as well as a UE-related context saved on the second base station.

14. The base station as claimed in claim 12, wherein the second protocol processing module is further configured to send an intra-MeNB handover notification message to the second base station to notify the second base station that an intra-base station handover has been performed or is being performed for the MeNB.

15. A storage medium, a computer program being stored in the storage medium, wherein the computer program is configured to execute the method for transmitting data during base station handover as claimed in any one of claims 1 to 4 and 9 to 11.
